(19) **Europäisches Patentamt / European Patent Office / Office européen des brevets**

(11) **EP 4 697 057 A1**

(12) **EUROPEAN PATENT APPLICATION**
published in accordance with Art. 153(4) EPC

(43) Date of publication:
**18.02.2026  Bulletin 2026/08**

(21) Application number: **23936550.5**

(22) Date of filing: **09.05.2023**

(51) International Patent Classification (IPC):
**G01S 5/04** (2006.01)    **G01S 5/20** (2006.01)

(52) Cooperative Patent Classification (CPC):
**G01S 5/04; G01S 5/20**

(86) International application number:
**PCT/JP2023/017349**

(87) International publication number:
**WO 2024/231996 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **FUNAKI, Nobutaka**
  **Tokyo 100-8310 (JP)**
• **KOBAYASHI, Yuki**
  **Tokyo 100-8310 (JP)**
• **ITO, Toshihiro**
  **Tokyo 100-8310 (JP)**

(74) Representative: **Pfenning, Meinig & Partner mbB
Patent- und Rechtsanwälte
Theresienhöhe 11a
80339 München (DE)**

(54) **TARGET STATE ESTIMATION DEVICE AND TARGET STATE ESTIMATION METHOD**

(57)     A target state estimation device includes: a calculated bearing value acquisition unit (11) that acquires a calculated bearing value indicating a bearing of a target, every time a period corresponding to a time window elapses; an estimated state value calculation unit (14) that estimates a state of the target using a calculated bearing value acquired by the calculated bearing value acquisition unit (11), and outputs an estimated state value indicating a result of the state estimation; an accuracy calculation unit (15) that calculates an accuracy of the estimated state value output from the estimated state value calculation unit (14); and a smoothed value calculation unit (16) that predicts the state of the target by performing a Kalman filter process on the estimated state value output from the estimated state value calculation unit (14), using the accuracy calculated by the accuracy calculation unit (15), and calculates a smoothed value indicating the state of the target, using a predicted state value indicating a result of the state prediction.

FIG. 1

Processed by Luminess, 75001 PARIS (FR)

EP 4 697 057 A1

**Description**

TECHNICAL FIELD

The present disclosure relates to a target state estimation device and a target state estimating method.

BACKGROUND ART

As a technique for estimating a state of a target that is moving, there is Bearing Only Target Motion Analysis (BO-TMA). The state of the target may be the position of the target and the velocity of the target, for example. BO-TMA is to estimate a state of a target, using only a measured bearing value from a bearing sensor that measures the bearing of the target at each point of a plurality of points. Because the bearing of the target and the position of the target are in a non-linear relationship, BO-TMA needs to handle a non-linear problem. Therefore, BO-TMA requires iterative calculation when estimating a state of a target. Because of this, BO-TMA has a problem in that the calculation amount required in estimating a state increases. There also is a problem in that the stability of a solution indicating an estimated value of a state might be impaired.

To solve the problems caused by handling of a non-linear problem, Non-Patent Literature 1 discloses a technique by which a non-linear problem is replaced with a pseudo linear problem with the use of a geometric relationship among the bearing of the target, the position of the target, and the position of the bearing sensor, and a state of the target is then estimated, for example.

CITATION LIST

NON-PATENT LITERATURE

Non-Patent Literature 1: L. Badriasl, S. Arulampalam, and A. Finn, "A Novel Batch Bayesian WIV Estimator for Three-Dimensional TMA Using Bearing and Elevation Measurements," IEEE Transactions on Signal Processing, vol. 66, no. 4, pp. 1023-1036, 2018

SUMMARY OF INVENTION

TECHNICAL PROBLEM

The technique disclosed in Non-Patent Literature 1 is based on the premise that a motion of the target is a uniform linear motion. Therefore, at times when a motion of the target is a non-uniform linear motion, there is a problem in that a state of the target is sometimes not estimated by the technique.

The present disclosure has been made to solve the above problem, and aims to obtain a target state estimation device that can estimate a state of a target, regardless of whether the target's motion is a uniform linear motion.

SOLUTION TO PROBLEM

A target state estimation device according to the present disclosure includes: a calculated bearing value acquisition unit to acquire a calculated bearing value indicating a bearing of a target, every time a period corresponding to a time window elapses; an estimated state value calculation unit to estimate a state of the target using a calculated bearing value acquired by the calculated bearing value acquisition unit, and output an estimated state value indicating a result of the state estimation; an accuracy calculation unit to calculate an accuracy of the estimated state value output from the estimated state value calculation unit; and a smoothed value calculation unit to predict the state of the target by performing a Kalman filter process on the estimated state value output from the estimated state value calculation unit, using the accuracy calculated by the accuracy calculation unit, and calculate a smoothed value indicating the state of the target, using a predicted state value indicating a result of the state prediction.

ADVANTAGEOUS EFFECTS OF INVENTION

According to the present disclosure, it is possible to estimate a state of a target, regardless of whether the target's motion is a uniform linear motion.

BRIEF DESCRIPTION OF DRAWINGS

FIG. 1 is a configuration diagram showing a target state estimation device according to a first embodiment.
FIG. 2 is a hardware configuration diagram showing the hardware of the target state estimation device according to the first embodiment.
FIG. 3 is a hardware configuration diagram of a computer in a case where the target state estimation device is formed with software, firmware, or the like.
FIG. 4 is a flowchart showing processing procedures to be carried out by a target state estimation unit 5.
FIG. 5 is a configuration diagram showing a target state estimation device according to a second embodiment.
FIG. 6 is a hardware configuration diagram showing the hardware of the target state estimation device according to the second embodiment.
FIG. 7 is an explanatory diagram illustrating a concept of determination as to an abnormality in a measured bearing value.
FIG. 8 is a configuration diagram showing a target state estimation device according to a third embodiment.
FIG. 9 is a hardware configuration diagram showing the hardware of the target state estimation device according to the third embodiment.

DESCRIPTION OF EMBODIMENTS

To explain the present disclosure in greater detail, modes for carrying out the present disclosure are described below with reference to the accompanying drawings.

First Embodiment

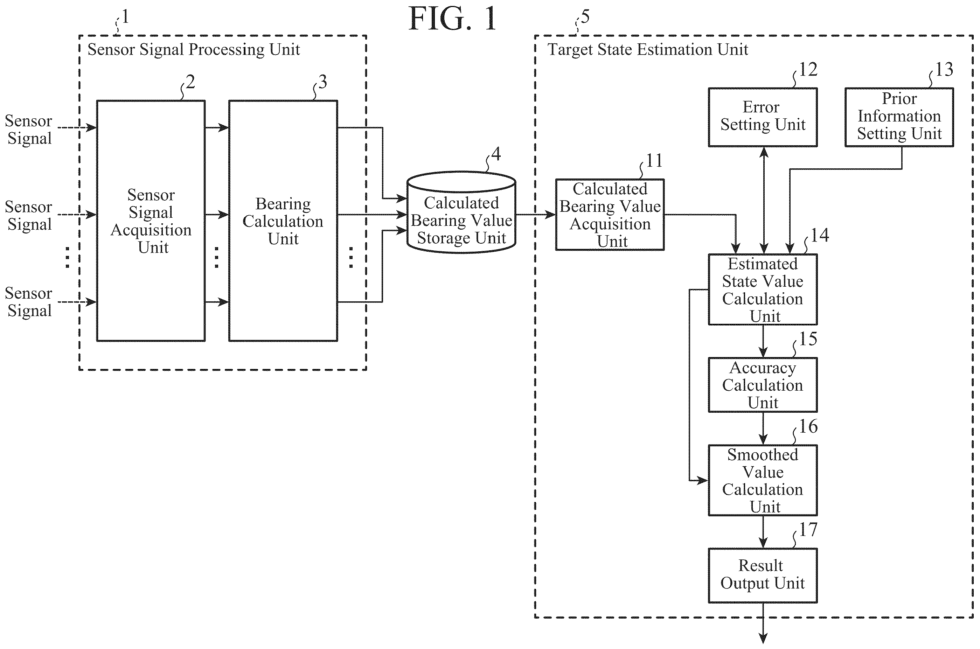

FIG. 1 is a configuration diagram showing a target state estimation device according to a first embodiment.

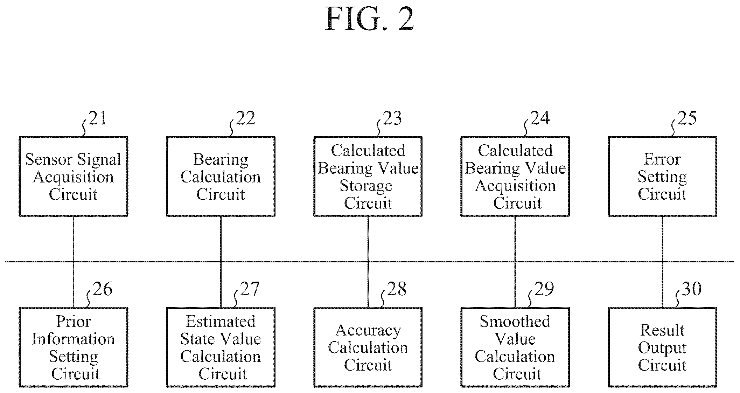

FIG. 2 is a hardware configuration diagram showing the hardware of the target state estimation device according to the first embodiment.
The target state estimation device shown in FIG. 1 includes a sensor signal processing unit 1, a calculated bearing value storage unit 4, and a target state estimation unit 5.
The sensor signal processing unit 1 includes a sensor signal acquisition unit 2 and a bearing calculation unit 3.
The sensor signal processing unit 1 acquires a sensor signal from a sensor that observes a target, and calculates a bearing of the target on the basis of the sensor signal.
The sensor signal processing unit 1 outputs a calculated bearing value indicating the result of the target bearing calculation to the calculated bearing value storage unit 4.
The sensor signal acquisition unit 2 is formed with a sensor signal acquisition circuit 21 shown in FIG. 2, for example.
The sensor signal acquisition unit 2 acquires a sensor signal from the sensor that observes the target, and outputs the sensor signal to the bearing calculation unit 3.
The bearing calculation unit 3 is formed with a bearing calculation circuit 22 shown in FIG. 2, for example.
The bearing calculation unit 3 calculates the bearing of the target, on the basis of the sensor signal output from the sensor signal acquisition unit 2.
The bearing calculation unit 3 outputs a calculated bearing value indicating the result of the target bearing calculation to the calculated bearing value storage unit 4.
The calculated bearing value storage unit 4 is formed with a calculated bearing value storage circuit 23 shown in FIG. 2, for example.
The calculated bearing value storage unit 4 stores the calculated bearing value that is output from the bearing calculation unit 3.
The target state estimation unit 5 includes a calculated bearing value acquisition unit 11, an error setting unit 12, a prior information setting unit 13, an estimated state value calculation unit 14, an accuracy calculation unit 15, a smoothed value calculation unit 16, and a result output unit 17.
The calculated bearing value acquisition unit 11 is formed with a calculated bearing value acquisition circuit 24 shown in FIG. 2, for example.
Every time a period corresponding to a time window elapses, the calculated bearing value acquisition unit 11 acquires a calculated bearing value indicating a bearing calculated by the sensor signal processing unit 1.
That is, every time the period corresponding to the time window elapses, the calculated bearing value acquisition unit 11 acquires the calculated bearing value stored in the calculated bearing value storage unit 4.

The calculated bearing value acquisition unit 11 outputs the calculated bearing value to the estimated state value calculation unit 14.

The error setting unit 12 is formed with an error setting circuit 25 shown in FIG. 2, for example.

The error setting unit 12 sets a measurement error variance of the calculated bearing value acquired by the calculated bearing value acquisition unit 11.

The error setting unit 12 outputs the measurement error variance of the calculated bearing value to the estimated state value calculation unit 14.

The prior information setting unit 13 is formed with a prior information setting circuit 26 shown in FIG. 2, for example.

The prior information setting unit 13 sets prior information regarding the state of the target.

The prior information setting unit 13 outputs the prior information to the estimated state value calculation unit 14.

The estimated state value calculation unit 14 is formed with an estimated state value calculation circuit 27 shown in FIG. 2, for example.

The estimated state value calculation unit 14 acquires a calculated bearing value from the calculated bearing value acquisition unit 11, acquires a measurement error variance of the calculated bearing value from the error setting unit 12, and acquires the prior information from the prior information setting unit 13.

The estimated state value calculation unit 14 estimates the state of the target, using the calculated bearing value, the measurement error variance, and the prior information.

The estimated state value calculation unit 14 outputs an estimated state value indicating a result of the target state estimation to each of the accuracy calculation unit 15 and the smoothed value calculation unit 16.

The accuracy calculation unit 15 is formed with an accuracy calculation circuit 28 shown in FIG. 2, for example.

The accuracy calculation unit 15 acquires the estimated state value from the estimated state value calculation unit 14.

The accuracy calculation unit 15 calculates the accuracy of the estimated state value, and outputs the accuracy of the estimated state value to the smoothed value calculation unit 16.

The smoothed value calculation unit 16 is formed with a smoothed value calculation circuit 29 shown in FIG. 2, for example.

The smoothed value calculation unit 16 acquires the estimated state value from the estimated state value calculation unit 14, and acquires the accuracy of the estimated state value of the accuracy calculation unit 15.

Using the accuracy of the estimated state value, the smoothed value calculation unit 16 performs a Kalman filter process on the estimated state value, to predict a state of the target.

Using a predicted state value indicating a result of the state prediction, the smoothed value calculation unit 16 calculates a smoothed value indicating the state of the target.

The smoothed value calculation unit 16 outputs the smoothed value indicating the state of the target to the result output unit 17.

The result output unit 17 is formed with a result output circuit 30 shown in FIG. 2, for example.

The result output unit 17 acquires the smoothed value indicating the state of the target from the smoothed value calculation unit 16.

The result output unit 17 outputs the smoothed value to a radar device (not shown) or a display device (not shown), for example.

In FIG. 1, it is assumed that each of the sensor signal acquisition unit 2, the bearing calculation unit 3, the calculated bearing value storage unit 4, the calculated bearing value acquisition unit 11, the error setting unit 12, the prior information setting unit 13, the estimated state value calculation unit 14, the accuracy calculation unit 15, the smoothed value calculation unit 16, and the result output unit 17, which are components of the target state estimation device, is formed with dedicated hardware as illustrated in FIG. 2. That is, it is assumed that the target state estimation device is formed with the sensor signal acquisition circuit 21, the bearing calculation circuit 22, the calculated bearing value storage circuit 23, the calculated bearing value acquisition circuit 24, the error setting circuit 25, the prior information setting circuit 26, the estimated state value calculation circuit 27, the accuracy calculation circuit 28, the smoothed value calculation circuit 29, and the result output circuit 30.

Here, the calculated bearing value storage circuit 23 may be a nonvolatile or volatile semiconductor memory such as a random access memory (RAM), a read only memory (ROM), a flash memory, an erasable programmable read only memory (EPROM), or an electrically erasable programmable read only memory (EEPROM), a magnetic disk, a flexible disk, an optical disk, a compact disk, a mini disk, or a digital versatile disc (DVD), for example.

Further, each of the sensor signal acquisition circuit 21, the bearing calculation circuit 22, the calculated bearing value acquisition circuit 24, the error setting circuit 25, the prior information setting circuit 26, the estimated state value calculation circuit 27, the accuracy calculation circuit 28, the smoothed value calculation circuit 29, and the result output circuit 30 is a single circuit, a composite circuit, a programmed processor, a parallel-programmed processor, an application specific integrated circuit (ASIC), a field-programmable gate array (FPGA), or a combination thereof, for example.

The components of the target state estimation device are not necessarily formed with dedicated hardware, and the target state estimation device may be formed with software, firmware, or a combination of software and firmware.

Software or firmware is stored as a program in a memory of a computer. A computer means hardware that executes a program, and is a central processing unit (CPU), a graphics processing unit (GPU), a central processor, a processing unit, an arithmetic unit, a microprocessor, a microcomputer, a processor, or a digital signal processor (DSP), for example.

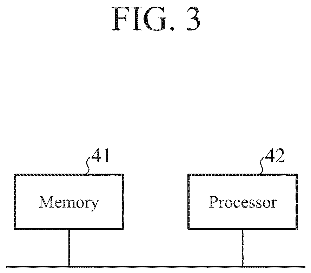

FIG. 3 is a hardware configuration diagram of a computer in a case where the target state estimation device is formed with software, firmware, or the like.

In a case where the target state estimation device is formed with software, firmware, or the like, the calculated bearing value storage unit 4 is formed in a memory 41 of the computer. A program for causing a computer to execute each processing procedure in the sensor signal acquisition unit 2, the bearing calculation unit 3, the calculated bearing value acquisition unit 11, the error setting unit 12, the prior information setting unit 13, the estimated state value calculation unit 14, the accuracy calculation unit 15, the smoothed value calculation unit 16, and the result output unit 17 is stored in the memory 41. A processor 42 of the computer executes the program stored in the memory 41.

Further, FIG. 2 illustrates an example in which each of the components of the target state estimation device is formed with dedicated hardware, and FIG. 3 illustrates an example in which the target state estimation device is formed with software, firmware, or the like. However, this is merely an example, and some components in the target state estimation device may be formed with dedicated hardware, while the remaining components may be formed with software, firmware, or the like.

Next, an operation to be performed by the target state estimation device illustrated in FIG. 1 is described.

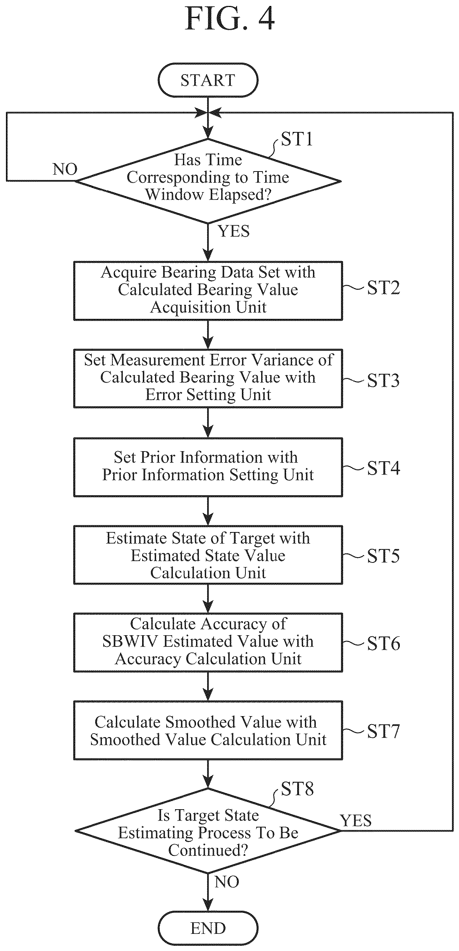

FIG. 4 is a flowchart showing processing procedures to be carried out by the target state estimation unit 5. The processing procedures to be carried out by the target state estimation unit 5 indicate part of a target state estimating method.

The sensor signal acquisition unit 2 acquires a sensor signal from the sensor that observes the target. The number of sensors that observe the target may be one or plural.

The sensor signal that is output from the sensor includes a target observation time t and sensor coordinates indicating the position of the sensor. The sensor coordinates are represented by a position vector $r_k$ of the sensor. Here, k is a variable for identifying the sensor, and k = 1, ..., K. K is an integer of 1 or greater.

The sensor signal acquisition unit 2 outputs the sensor signal to the bearing calculation unit 3.

The bearing calculation unit 3 acquires the sensor signal from the sensor signal acquisition unit 2.

The bearing calculation unit 3 calculates the bearing of the target, on the basis of the sensor signal.

The target bearing calculation process based on the sensor signal is a known technique, and therefore, a detailed explanation thereof is not made herein.

The bearing calculation unit 3 outputs a calculated bearing value indicating the result of the target bearing calculation, the target observation time t included in the sensor signal, and the sensor position vector $r_k$ included in the sensor signal, to the calculated bearing value storage unit 4. The calculated bearing value includes a calculated bearing value $\theta tilde_k$ in a bearing angle direction and a calculated bearing value $\varphi tilde_k$ in the elevation angle direction. In the sentences in the specification, the symbol "~" cannot be put over characters, because of the restrictions on electronic applications, and therefore, is written as in $\theta tilde_k$ or $\varphi tilde_k$, for example. Also, the calculated bearing value is expressed with a vector $c_k$ orthogonal to the bearing of the target and a position vector $p_k$ of the target, for example.

As a result, the calculated bearing value storage unit 4 stores a set of the calculated bearing value, the target observation time t, and the sensor position vector $r_k$.

Hereinafter, a set of the calculated bearing value, the target observation time t, and the sensor position vector $r_k$ will be referred to as a bearing data set DS.

The calculated bearing value acquisition unit 11 awaits until the period corresponding to the time window elapses (step ST1 in FIG. 4: NO).

Every time the period corresponding to the time window elapses (step ST1 in FIG. 4: YES), the calculated bearing value acquisition unit 11 acquires a bearing data set DS from the calculated bearing value storage unit 4 (step ST2 in FIG. 4).

Specifically, the period corresponding to the time window is represented by tw, and the observation time t included in the bearing data set DS acquired by the calculated bearing value acquisition unit 11 from the calculated bearing value storage unit 4 last time is represented by ti. In this case, the calculated bearing value acquisition unit 11 acquires the bearing data set DS including the observation time t that is the first among the observation times after $t_1$ + tw, among the bearing data sets stored in the calculated bearing value storage unit 4.

The period tw corresponding to the time window is set in time with the target's motion. That is, in a case where the target's motion is a non-uniform linear motion, when the period tw corresponding to the time window is sufficiently shorter than the time required for a change in the velocity of the target, the target's motion can be regarded as a uniform motion. Also, in a case where the target's motion is a non-uniform linear motion, when the period tw corresponding to the time window is sufficiently shorter than the time required for a change in the traveling direction of the target, the target's motion can be regarded as a linear motion. Therefore, the period tw corresponding to the time window is set to a time with which the target's motion can be regarded as a uniform linear motion even in a case where the target's motion is a non-uniform linear motion.

Note that the period tw corresponding to the time window may change with the lapse of time. Further, some time windows of a plurality of time windows that are adjacent in terms of time may overlap each other.

The calculated bearing value acquisition unit 11 outputs the bearing data set DS acquired from the calculated bearing value storage unit 4 to the estimated state value calculation unit 14.

The error setting unit 12 sets a measurement error variance of the calculated bearing value included in the bearing data set DS acquired by the calculated bearing value acquisition unit 11 (step ST3 in FIG. 4).

The method of setting the measurement error variance by the error setting unit 12 may be any method. However, as long as some additional accuracy information is given to the measured bearing value, the measurement error variance may be set on the basis of the additional accuracy information. For example, when the additional accuracy information indicates the accuracy of the calculated bearing value, a larger measurement error variance may be set in response to a lower accuracy of the calculated bearing value.

The error setting unit 12 outputs the measurement error variance of the calculated bearing value to the estimated state value calculation unit 14.

The prior information setting unit 13 sets prior information regarding the state of the target (step ST4 in FIG. 4).

Specifically, the prior information setting unit 13 sets an expectation value of the prior probability for the state of the target, and a covariance matrix of the prior probability for the state of the target, for example, as the prior information regarding the state of the target.

The method of setting the prior information to be set by the prior information setting unit 13 may be any method, and, for example, the prior information may be set using a predicted distribution of the Kalman filter to be used by the smoothed value calculation unit 16 as the prior distribution. In a case where it is difficult to set the prior information regarding the state of the target, the prior information setting unit 13 may set a sufficiently large value for the covariance matrix of the prior probability so that the influence of the prior information can be ignored.

The prior information setting unit 13 outputs the prior information to the estimated state value calculation unit 14.

The estimated state value calculation unit 14 acquires the bearing data set DS from the calculated bearing value acquisition unit 11, acquires the measurement error variance from the error setting unit 12, and acquires the prior information from the prior information setting unit 13.

The estimated state value calculation unit 14 estimates the state of the target, using the bearing data set DS, the measurement error variance, and the prior information (step ST5 in FIG. 4). The estimated state value indicating the result of the state estimation performed by the estimated state value calculation unit 14 is an estimated value of a short-time Bayesian weighted instrumental variable (SBWIV), for example.

The estimated state value calculation unit 14 outputs the estimated state value indicating the result of the target state estimation to each of the accuracy calculation unit 15 and the smoothed value calculation unit 16.

In the description below, the target state estimation process to be performed by the estimated state value calculation unit 14 is specifically explained. Details of the target state estimation process are disclosed in Non-Patent Literature 1.

First, the estimated state value calculation unit 14 sets up a positioning equation as shown below in Expression (1) as the positioning equation expressing the relationship between the bearing of the target and the position of the target in a pseudo linear manner.

$$c_k^T p_k = c_k^T r_k \qquad\qquad (1)$$

In Expression (1), T is a mathematical symbol indicating transposition.

The estimated state value calculation unit 14 performs maximum a posteriori (MAP) estimation that is maximum a posteriori probability estimation using the measurement error covariance and the prior information, to calculate a Bayesian weighted pseudo-linear estimator (BWPLE) that is an estimation amount.

Next, the estimated state value calculation unit 14 corrects the bias error caused by the pseudo-linearization included in the BWPLE, to calculate an estimation amount called a Bayesian bias compensated weighted pseudo-linear estimator (BBCPLE).

Lastly, the estimated state value calculation unit 14 calculates an SBWIV estimated value, which is the estimated state value obtained by correcting the bias by applying an instrumental variable estimation using the estimated bearing value back-calculated from the BBCPLE.

In a case where the target's motion is a non-uniform linear motion, the SBWIV estimated value might include an error. However, by setting the period tw corresponding to the time window as a period during which there is no problem even if the motion is regarded as a uniform linear motion, it is possible to set the error of the SBWIV estimated value to a magnitude with which there is no problem in practical use. On the other hand, as the period tw corresponding to the time window is shortened, the estimation accuracy of the SBWIV estimated value might drop. In such a case, the smoothed value calculation unit 16 uses the error covariance matrix that is the accuracy of the SBWIV estimated value in performing a Kalman filter process on the SBWIV estimated value, to predict the state of the target. The smoothed value calculation unit 16 then performs a smoothing process using a predicted state value $x_{m|m-l}$ and a prediction error covariance matrix $P_{m|m-l}$, to calculate an estimated target state value $x_{m|m}$ that is a smoothed value indicating the state of the target. Thus, even in a case where the target's motion is a non-uniform linear motion, the error included in the estimated target state value $x_{m|m}$ is of a practically acceptable magnitude.

The accuracy calculation unit 15 acquires the SBWIV estimated value, which is the estimated state value, from the estimated state value calculation unit 14.

The accuracy calculation unit 15 calculates the accuracy of the SBWIV estimated value (step ST6 in FIG. 4).

The accuracy calculation unit 15 outputs the accuracy of the SBWIV estimated value to the smoothed value calculation unit 16.

In the description below, the process to be performed by the accuracy calculation unit 15 to calculate the accuracy of the SBWIV estimated value is specifically explained.

An ideal accuracy of the SBWIV estimated value asymptotically approaches the Bayesian Cramer-Rao Bound (BCRB). In view of this, the accuracy calculation unit 15 calculates the BCRB at the start time of the time window as shown below in Expression (2).

$$\widehat{R}_{BCRB,m,0}$$
$$= \left\{ \Sigma_0^{-1} \right.$$
$$\left. + \sum_{k=k_{m,s}}^{k_{m,e}} \left( \nabla_{F_{-m}\widehat{x}_m^{SBWIV}} h(F_{-m}\widehat{x}_m^{SBWIV}, k) \right) \Sigma_{\theta\phi,k}^{-1} \left( \nabla_{F_{-m}\widehat{x}_m^{SBWIV}} h(F_{-m}\widehat{x}_m^{SBWIV}, k) \right)^T \right\}^{-1}$$

$$( 2 )$$

In Expression (2), $\hat{R}_{BCRB,m,0}$ represents the BCRB at the start time of the time window.

$\Sigma_0$ represents the covariance matrix of the prior probability that has been set by the prior information setting unit 13, and $\Sigma_{\theta\phi,k}$ represents a matrix in which the measurement error covariance of the measured bearing value that has been set by the error setting unit 12 is diagonally placed. $F_{-m}\widehat{x}_m^{SBWIV}$ is obtained by converting the SBWIV estimated value at the representative time of the m-th time window into the estimated value at the start time of the time window with the state transition matrix $F_{-m}$ expressed by Expression (3) shown below. $\nabla_{F_{-m}\widehat{x}_m^{SBWIV}} h(F_{-m}\widehat{x}_m^{SBWIV}, k)$ represents a partial differential matrix in the target state with respect to the bearing, and is expressed by Expression (4) shown below.

$$F_{-m} = \begin{bmatrix} I_{3\times3} & -\Delta t_m I_{3\times3} \\ 0 & I_{3\times3} \end{bmatrix} \qquad ( 3 )$$

In Expression (3), $\Delta t_m$ represents the time difference between the representative time of the m-th time window and the start time of the time window.

$$\nabla_{F_{-m}\widehat{x}_m^{BWIV}} h(F_{-m}\widehat{x}_m^{BWIV}, k)$$

$$= \begin{bmatrix} -\dfrac{\Delta y_k}{l_k^2} & \dfrac{\Delta x_k}{l_k^2} & 0 & -\dfrac{\Delta t_k \Delta y_k}{l_k^2} & \dfrac{\Delta t_k \Delta x_k}{l_k^2} & 0 \\[2ex] -\dfrac{\Delta z_k \Delta x_k}{l_k d_k^2} & -\dfrac{\Delta z_k \Delta y_k}{l_k d_k^2} & \dfrac{l_k}{d_k^2} & -\dfrac{\Delta t_k \Delta z_k \Delta x_k}{l_k d_k^2} & -\dfrac{\Delta t_k \Delta z_k \Delta y_k}{l_k d_k^2} & \dfrac{\Delta t_k l_k}{d_k^2} \end{bmatrix}^T$$

$$(4)$$

$$[\Delta x_k, \Delta y_k, \Delta z_k]^T = M_k^T F_{-m}\widehat{x}_m^{SBWIV} - r_k \qquad (5)$$

$$l_k = \sqrt{\Delta x_k^2 + \Delta y_k^2} \qquad (6)$$

$$d_k = \sqrt{\Delta x_k^2 + \Delta y_k^2 + \Delta z_k^2} \qquad (7)$$

In Expression (5), $M_k$ represents a transformation matrix expressed by Expression (8) shown below, using the time difference $\Delta t_k$ from the start time of the time window till the k-th observation time.

$$M_k = [I_{3\times 3}, \quad \Delta t_k I_{3\times 3}] \qquad (8)$$

Next, to convert the $\text{Rhat}_{BCRM,m,0}$, which is the BCRB at the start time of the time window, into the value corresponding to the time $t_m$, the accuracy calculation unit 15 divides the $\text{Rhat}_{BCRM,m,0}$ into four submatrices of three rows by three columns as shown below in Expression (9). In the sentences in the specification, the symbol "^" cannot be put over characters, because of the restrictions on electronic applications, and therefore, is written as in $\text{Rhat}_{BCRM,m,0}$, for example.

$$\widehat{R}_{BCRB,m,0} = \begin{bmatrix} A & C \\ B & D \end{bmatrix} \qquad (9)$$

The BCRB corresponding to the representative time of the m-th time window is expressed as shown below in Expression (10). The BCRB is the lower limit of theoretical accuracy. Therefore, the accuracy calculation unit 15 sets, as the error covariance matrix $\text{Rhat}_m^{BWIV}$ of the SBWIV estimated value, the value obtained by multiplying the $\text{Rhat}_{BCRM,m}$ by any real number that is one or more adjustment parameters. The error covariance matrix $\text{Rhat}_m^{BWIV}$ of the SBWIV estimated value corresponds to the accuracy of the SBWIV estimated value.

Note that the representative time of the m-th time window may be an average value of observation times associated with the measured bearing values included in the m-th time window, or may be a weighted average value of observation times in a case where there is a variation in errors of measured bearing values, for example.

$$\widehat{R}_{BCRB,m} = \begin{bmatrix} A + \Delta t_m B + \Delta t_m C + \Delta t_m^2 D & C + \Delta t_m D \\ B + \Delta t_m D & D \end{bmatrix} \qquad (10)$$

The smoothed value calculation unit 16 acquires the SBWIV estimated value, which is the estimated state value, from the estimated state value calculation unit 14, and acquires the error covariance matrix $\text{Rhat}_m^{BWIV}$, which is the accuracy of the estimated state value, from the accuracy calculation unit 15.

Using the error covariance matrix $\text{Rhat}_m^{BWIV}$, the smoothed value calculation unit 16 performs a Kalman filter process on the SBWIV estimated value, to predict a state of the target.

Using a predicted state value indicating the result of the state prediction, the smoothed value calculation unit 16 then calculates a smoothed value indicating the state of the target (step ST7 in FIG. 4).

In the description below, the smoothed value calculation process to be performed by the smoothed value calculation unit 16 is specifically explained.

The motion model to be used in the Kalman filter process is expressed as shown below in Expression (11).

$$x_{m+1} = \boldsymbol{\Phi}_m \, x_m + w_m \qquad (11)$$

$$\boldsymbol{\Phi}_m = \begin{bmatrix} \boldsymbol{I}_{3\times3} & (t_{m+1} - t_m)\boldsymbol{I}_{3\times3} \\ \boldsymbol{0} & \boldsymbol{I}_{3\times3} \end{bmatrix} \qquad (12)$$

In Expression (11), $x_m$ represents a state vector in which the three-dimensional position and the three-dimensional velocity of the target are placed, and $w_m$ represents drive noise.

The observation model of the target is expressed as shown below in Expression (13).

$$z_m = x_m + v_m \qquad (13)$$

In the target state estimation device illustrated in FIG. 1, an input of the observation model is not a sensor observation value but an SBWIV estimated value. This aspect differs from that of a regular Kalman filter. Accordingly, the dimensions of the observation model and the motion model coincide with each other in six dimensions of position and velocity. Further, $v_m$ is not an observation error but an error in the SBWIV estimated value.

The smoothed value calculation unit 16 performs a Kalman filter process on the SBWIV estimated value, on the basis of the above model.

When m = 1, the SBWIV estimated value xhat$_1$^BWIV is the smoothed value $x_{1|1}$ as shown below in Expression (14), and the error covariance matrix Rhat$_1$^BWIV of the estimated state value is the smoothing error covariance matrix $P_{1|1}$ as shown below in Expression (15).

$$x_{1|1} = \widehat{x}_1^{BWIV} \qquad (14)$$

$$P_{1|1} = \widehat{R}_1^{BWIV} \qquad (15)$$

When m > 1, the prediction process to be performed by the smoothed value calculation unit 16 is expressed as shown below in Expressions (16) and (17).

$$x_{m|m-1} = \boldsymbol{\Phi}_{m-1} \, x_{m|m} \qquad (16)$$

$$P_{m|m-1} = \boldsymbol{\Phi}_{m-1} P_{m-1|m-1} \boldsymbol{\Phi}_{m-1}^T + \boldsymbol{Q}_{m-1} \qquad (17)$$

In Expression (17), $Q_{m-1}$ represents the drive error covariance matrix at m-1.

The smoothed value calculation unit 16 performs a smoothing process using the predicted state value $x_{m|m-1}$ and the prediction error covariance matrix $P_{m|m-1}$, to calculate the estimated target state value $x_{m|m}$, which is the smoothed value indicating the state of the target, as shown below in Expressions (18) and (19).

The smoothed value calculation unit 16 also performs a smoothing process using the prediction error covariance matrix $P_{m|m-1}$, to calculate the smoothing error covariance matrix $P_{m|m}$, as shown below in Expressions (18) and (20).

The smoothed value calculation unit 16 outputs the estimated target state value $x_{m|m}$ to the result output unit 17.

$$K_m = P_{m|m-1}\left(P_{m|m-1} + R_m^{BWIV}\right)^{-1} \qquad (18)$$

$$x_{m|m} = x_{m|m-1} + K_m\left(\widehat{x}_m^{BWIV} - x_{m|m-1}\right) \qquad (19)$$

$$P_{m|m} = P_{m|m-1} - K_m P_{m|m-1} \qquad (20)$$

As described above, the smoothed value calculation unit 16 predicts the state of the target by performing the Kalman filter process on the SBWIV estimated value calculated by the estimated state value calculation unit 14 every time the period corresponding to the time window elapses, and calculates the smoothed value indicating the state of the target, using the predicted state value indicating the result of the state prediction. Thus, the target state estimation unit 5 can smooth the variation in the SBWIV estimated value due to a decrease in the number of observations of sensor signals, and can also perform highly accurate state estimation even when the target performs a non-uniform linear motion. Furthermore, a state of the target can be estimated every time the period corresponding to the time window elapses, and thus, the responsiveness and promptness of state estimation can be enhanced.

The result output unit 17 acquires the estimated target state value $x_{m|m}$ from the smoothed value calculation unit 16.

The result output unit 17 outputs the estimated target state value $x_{m|m}$ to a radar device (not shown) or a display device (not shown), for example.

As the estimated target state value $x_{m|m}$ is obtained, a trajectory of the target state is obtained.

If the target state estimation unit 5 continues the target state estimation process (step ST8 in FIG. 4: YES), the target state estimation unit 5 again performs the processes in steps ST1 to ST8 in FIG. 4.

If the target state estimation unit 5 is not to continue the target state estimation process (step ST8 in FIG. 4: NO), the target state estimation unit 5 ends the series of processes.

In the first embodiment described above, the target state estimation device is designed to include: the calculated bearing value acquisition unit 11 that acquires a calculated bearing value indicating the bearing of a target every time the period corresponding to a time window elapses; the estimated state value calculation unit 14 that estimates a state of the target using the calculated bearing value acquired by the calculated bearing value acquisition unit 11, and outputs an estimated state value indicating the result of the state estimation; the accuracy calculation unit 15 that calculates the accuracy of the estimated state value output from the estimated state value calculation unit 14; and the smoothed value calculation unit 16 that predicts the state of the target by performing a Kalman filter process on the estimated state value output from the estimated state value calculation unit 14 using the accuracy calculated by the accuracy calculation unit 15, and calculates a smoothed value indicating the state of the target using a predicted state value indicating the result of the state prediction. Thus, the target state estimation device can estimate a state of a target, regardless of whether the motion of the target is a uniform linear motion.

Second Embodiment

A second embodiment concerns a target state estimation device including an abnormal value determination unit 18 that determines whether a calculated bearing value acquired by a calculated bearing value acquisition unit 11 is an abnormal value, using a predicted state value indicating a result of state estimation performed by a smoothed value calculation unit 16.

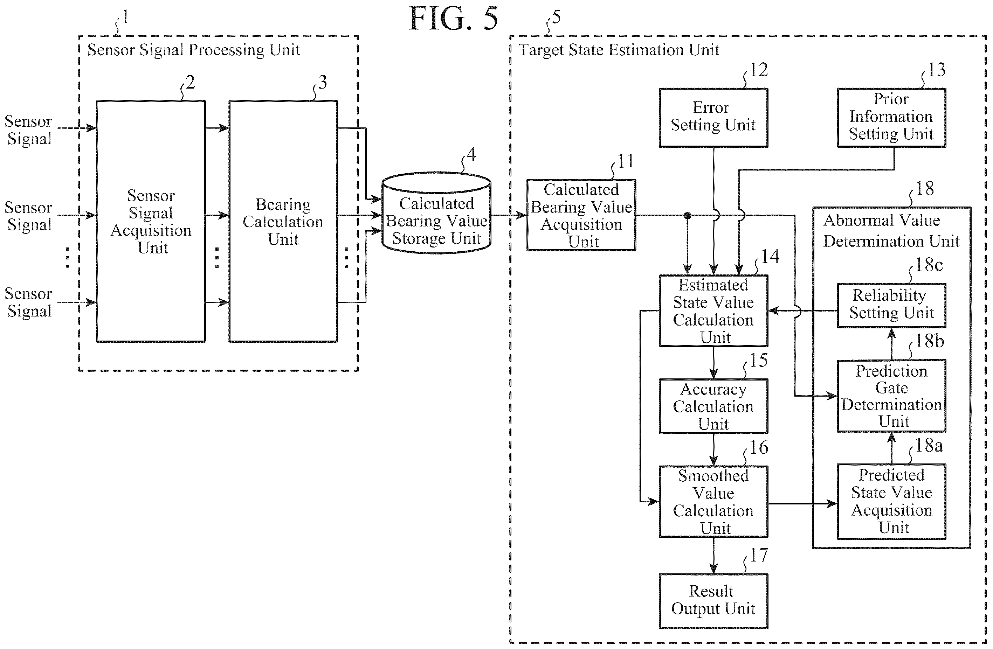

FIG. 5 is a configuration diagram showing the target state estimation device according to the second embodiment. In FIG. 5, the same reference numerals as those in FIG. 1 denote the same or corresponding components, and therefore, detailed explanation of these components is not made herein.

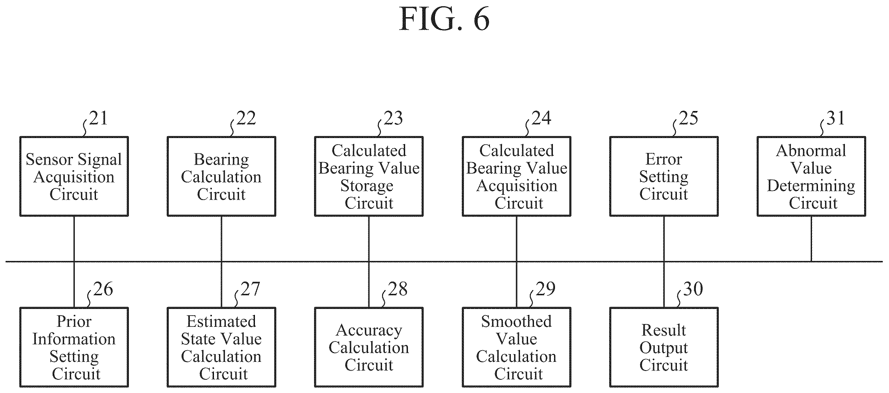

FIG. 6 is a hardware configuration diagram showing the hardware of the target state estimation device according to the second embodiment. In FIG. 6, the same reference numerals as those in FIG. 2 denote the same or corresponding components, and therefore, detailed explanation of these components is not made herein.

A target state estimation unit 5 shown in FIG. 5 includes the calculated bearing value acquisition unit 11, an error setting unit 12, a prior information setting unit 13, an estimated state value calculation unit 14, an accuracy calculation unit 15, the smoothed value calculation unit 16, a result output unit 17, and the abnormal value determination unit 18.

The abnormal value determination unit 18 is formed with an abnormal value determination circuit 31 shown in FIG. 6, for example.

The abnormal value determination unit 18 includes a predicted state value acquisition unit 18a, a prediction gate determination unit 18b, and a reliability setting unit 18c.

The abnormal value determination unit 18 acquires a predicted state value indicating a result of state prediction from the smoothed value calculation unit 16, and acquires a calculated bearing value from the calculated bearing value acquisition unit 11.

The abnormal value determination unit 18 converts the predicted state value into a bearing of the target, and calculates a residual error between the calculated bearing value and the converted bearing.

The abnormal value determination unit 18 calculates a variance from the residual error between the calculated bearing value and the converted bearing, and a residual covariance matrix obtained from a prediction error covariance matrix of the target.

On the basis of the variance, the abnormal value determination unit 18 determines whether the calculated bearing value acquired by the calculated bearing value acquisition unit 11 is an abnormal value.

The predicted state value acquisition unit 18a acquires a predicted state value indicating a result of state prediction and the prediction error covariance matrix from the smoothed value calculation unit 16.

The predicted state value acquisition unit 18a outputs the predicted state value and the prediction error covariance matrix to the prediction gate determination unit 18b.

The prediction gate determination unit 18b acquires the predicted state value and the prediction error covariance matrix from the predicted state value acquisition unit 18a, and acquires the calculated bearing value from the calculated bearing value acquisition unit 11.

The prediction gate determination unit 18b converts the predicted state value into a bearing of the target.

The prediction gate determination unit 18b calculates the residual error between the calculated bearing value and the converted bearing.

The prediction gate determination unit 18b calculates the residual covariance matrix from the prediction error covariance matrix.

The prediction gate determination unit 18b calculates the variance from the residual error and the residual covariance matrix.

On the basis of the variance, the prediction gate determination unit 18b determines whether the calculated bearing value acquired by the calculated bearing value acquisition unit 11 is an abnormal value.

When the calculated bearing value is determined to be an abnormal value by the prediction gate determination unit 18b, the reliability setting unit 18c replaces the value of the measurement error variance corresponding to the calculated bearing value with a larger value, to reduce the influence of the abnormal measured bearing value on the state estimation. The measurement error variance corresponding to the calculated bearing value is the measurement error variance that has been set by the error setting unit 12.

In FIG. 5, it is assumed that each of the sensor signal acquisition unit 2, the bearing calculation unit 3, the calculated bearing value storage unit 4, the calculated bearing value acquisition unit 11, the error setting unit 12, the prior information setting unit 13, the estimated state value calculation unit 14, the accuracy calculation unit 15, the smoothed value calculation unit 16, the result output unit 17, and the abnormal value determination unit 18, which are components of the target state estimation device, is formed with dedicated hardware as illustrated in FIG. 6. That is, it is assumed that the target state estimation device is formed with a sensor signal acquisition circuit 21, a bearing calculation circuit 22, a calculated bearing value storage circuit 23, a calculated bearing value acquisition circuit 24, an error setting circuit 25, a prior information setting circuit 26, an estimated state value calculation circuit 27, an accuracy calculation circuit 28, a smoothed value calculation circuit 29, a result output circuit 30, and the abnormal value determination circuit 31.

Each of the sensor signal acquisition circuit 21, the bearing calculation circuit 22, the calculated bearing value acquisition circuit 24, the error setting circuit 25, the prior information setting circuit 26, the estimated state value calculation circuit 27, the accuracy calculation circuit 28, the smoothed value calculation circuit 29, the result output circuit 30, and the abnormal value determination circuit 31 is a single circuit, a composite circuit, a programmed processor, a parallel-programmed processor, an ASIC, an FPGA, or a combination thereof, for example.

The components of the target state estimation device are not necessarily formed with dedicated hardware, and the target state estimation device may be formed with software, firmware, or a combination of software and firmware.

In a case where the target state estimation device is formed with software, firmware, or the like, the calculated bearing value storage unit 4 is formed in the memory 41 shown in FIG. 3. A program for causing a computer to execute each processing procedure in the sensor signal acquisition unit 2, the bearing calculation unit 3, the calculated bearing value acquisition unit 11, the error setting unit 12, the prior information setting unit 13, the estimated state value calculation unit 14, the accuracy calculation unit 15, the smoothed value calculation unit 16, the result output unit 17, and the abnormal value determination unit 18 is stored in the memory 41 shown in FIG. 3. The processor 42 shown in FIG. 3 then executes the program stored in the memory 41.

Further, FIG. 6 illustrates an example in which each of the components of the target state estimation device is formed with dedicated hardware, and FIG. 3 illustrates an example in which the target state estimation device is formed with software, firmware, or the like. However, this is merely an example, and some components in the target state estimation device may be formed with dedicated hardware, while the remaining components may be formed with software, firmware, or the like.

Next, an operation to be performed by the target state estimation device illustrated in FIG. 5 is described. However, the target state estimation device is the same as the target state estimation device shown in FIG. 1, except for the abnormal value determination unit 18. Therefore, only the operation to be performed by the abnormal value determination unit 18 is described herein.

The predicted state value acquisition unit 18a acquires a predicted state value $x_{m|m-1}$ and a prediction error covariance matrix $P_{m|m-1}$ from the smoothed value calculation unit 16.

The predicted state value $x_{m|m-1}$ can be expressed as $x_{k|m-1}$, as shown below in Expression (21).

The prediction error covariance matrix $P_{m|m-1}$ can be expressed as $P_{k|m-1}$, as shown below in Expression (22).

The predicted state value acquisition unit 18a outputs the predicted state value $x_{k|m-1}$ and the prediction error covariance matrix $P_{k|m-1}$ to the prediction gate determination unit 18b.

$$x_{k|m-1} = \boldsymbol{\Phi}_k \, x_{m-1|m-1} \tag{21}$$

$$P_{k|m-1} = \boldsymbol{\Phi}_k P_{m-1|m-1} \boldsymbol{\Phi}_k^T + \boldsymbol{Q}_k \tag{22}$$

$$\boldsymbol{\Phi}_k = \begin{bmatrix} \boldsymbol{I}_{3\times3} & (t_k - t_{m-1})\boldsymbol{I}_{3\times3} \\ \boldsymbol{0} & \boldsymbol{I}_{3\times3} \end{bmatrix} \tag{23}$$

In Expression (23), $t_k$ represents the observation time associated with the measured bearing value subjected to the abnormality determination.

The prediction gate determination unit 18b acquires the predicted state value $x_{k|m-1}$ and the prediction error covariance matrix $P_{k|m-1}$ from the predicted state value acquisition unit 18a, and acquires the calculated bearing value from the calculated bearing value acquisition unit 11. The calculated bearing value includes a calculated bearing value $\tilde{\theta}_k$ in a bearing angle direction and a calculated bearing value $\tilde{\varphi}_k$ in the elevation angle direction.

The prediction gate determination unit 18b converts the predicted state value $x_{k|m-1}$ into a bearing angle $\theta(x_{k|m-1})$ and an elevation angle $\varphi(x_{k|m-1})$ as the bearing of the target. The process of converting the predicted state value $x_{k|m-1}$ into a bearing of the target or the like is a known technique, and therefore, a detailed explanation thereof is not made herein.

The prediction gate determination unit 18b calculates a residual error $e_k$ between the calculated bearing value and the converted bearing, as shown below in Expression (24).

The prediction gate determination unit 18b also calculates a residual covariance matrix $R_s$ from the prediction error covariance matrix $P_{k|m-1}$, as shown below in Expression (25).

$$e_k = \left[\theta\big(x_{k|m-1}\big) - \tilde{\theta}_k, \phi\big(x_{k|m-1}\big) - \tilde{\phi}_k\right]^T \tag{24}$$

$$R_s = H_k P_{k|m-1} H_k^T + \boldsymbol{\Sigma}_{\theta\phi,k} \tag{25}$$

In Expression (25), $H_k$ corresponds to the first to third columns of the matrix expressed by Expression (4).

The prediction gate determination unit 18b calculates a variance $L^2$ from the residual error $e_k$ and the residual covariance matrix $R_s$, as shown below in Expression (26).

$$L^2 = e_k^T R_s^{-1} e_k \tag{26}$$

The prediction gate determination unit 18b compares the variance $L^2$ with a threshold, and, on the basis of the result of the comparison between the variance $L^2$ and the threshold, determines whether the calculated bearing value is an abnormal value. The threshold may be stored in an internal memory in the prediction gate determination unit 18b, or may be given from outside the target state estimation device shown in FIG. 5.

Specifically, when the variance $L^2$ is larger than the threshold, the prediction gate determination unit 18b determines that the calculated bearing value is an abnormal value. When the variance $L^2$ is equal to or smaller than the threshold, the prediction gate determination unit 18b determines that the calculated bearing value is not an abnormal value.

The prediction gate determination unit 18b outputs a determination result indicating whether the calculated bearing value is an abnormal value, to the reliability setting unit 18c.

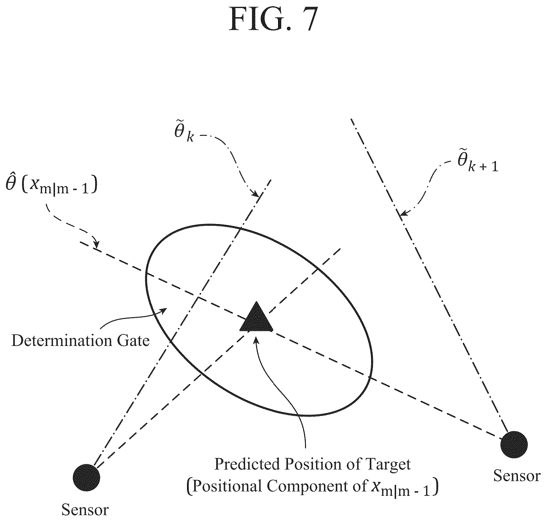

FIG. 7 is an explanatory diagram illustrating the concept of determination as to an abnormality in a measured bearing value.

In FIG. 7, the determination gate is set in such a way as to surround the predicted target position included in the predicted state value $x_{m|m-1}$. For example, when the calculated bearing value $\tilde{\theta}_k$ in the bearing angle direction is included in the determination gate, it is determined that the calculated bearing value $\tilde{\theta}_k$ is not an abnormal value. When the calculated bearing value $\tilde{\theta}_k$ in the bearing angle direction is outside the determination gate, it is determined that the

calculated bearing value $\theta tilde_k$ is an abnormal value. The size of the determination gate is set in accordance with an assumed bearing measurement environment, for example.

The reliability setting unit 18c acquires, from the prediction gate determination unit 18b, the determination result indicating whether the calculated bearing value is an abnormal value.

When it is determined that the calculated bearing value is an abnormal value, the reliability setting unit 18c replaces the value of the measurement error variance corresponding to the calculated bearing value, which is an abnormal value, with a larger value. As the value of the measurement error variance corresponding to the calculated bearing value is replaced with a larger value, the influence of the abnormal measured bearing value on the state estimation is reduced when the estimated state value calculation unit 14 estimates a state of the target.

In the target state estimation device shown in FIG. 5, the prediction gate determination unit 18b determines whether the calculated bearing value is an abnormal value, on the basis of the result of the comparison between the variance $L^2$ and the threshold. However, this is merely an example. The prediction gate determination unit 18b may classify abnormalities into two or more degrees depending on the value of the variance $L^2$, and the reliability setting unit 18c may change the value of the measurement error variance corresponding to the calculated bearing value, depending on the abnormality degrees.

In the second embodiment described above, the target state estimation device illustrated in FIG. 5 is designed in such a way that the abnormal value determination unit 18 converts a predicted state value indicating a result of state prediction performed by the smoothed value calculation unit 16 into a bearing of the target, calculates a variance from the residual error between the calculated bearing value acquired by the calculated bearing value acquisition unit 11 and the converted bearing and from a residual covariance matrix obtained from the prediction error covariance matrix of the target, and, on the basis of the variance, determines whether the calculated bearing value acquired by the calculated bearing value acquisition unit 11 is an abnormal value. Thus, like the target state estimation device illustrated in FIG. 1, the target state estimation device illustrated in FIG. 5 can estimate a state of the target, regardless of whether the target's motion is a uniform linear motion, and can also suppress deterioration of state estimation accuracy due to an abnormal calculated bearing value.

Third Embodiment

A third embodiment concerns a target state estimation device including a smoothing processing unit 19 that further smooths a smoothed value calculated by a smoothed value calculation unit 16.

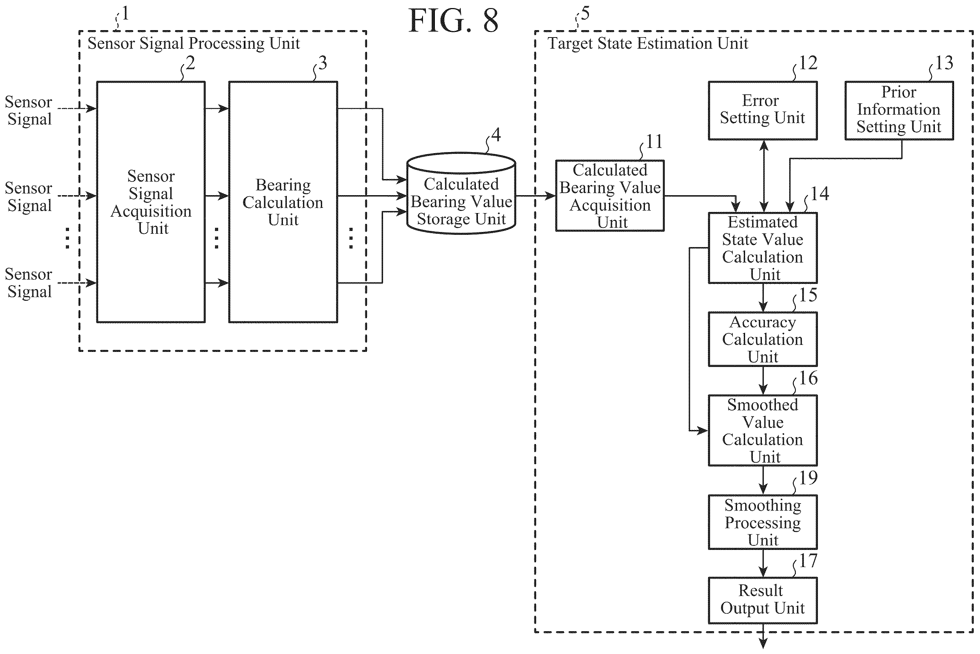

FIG. 8 is a configuration diagram showing the target state estimation device according to the third embodiment. In FIG. 8, the same reference numerals as those in FIG. 1 and FIG. 5 denote the same or corresponding components, and therefore, detailed explanation of these components is not made herein.

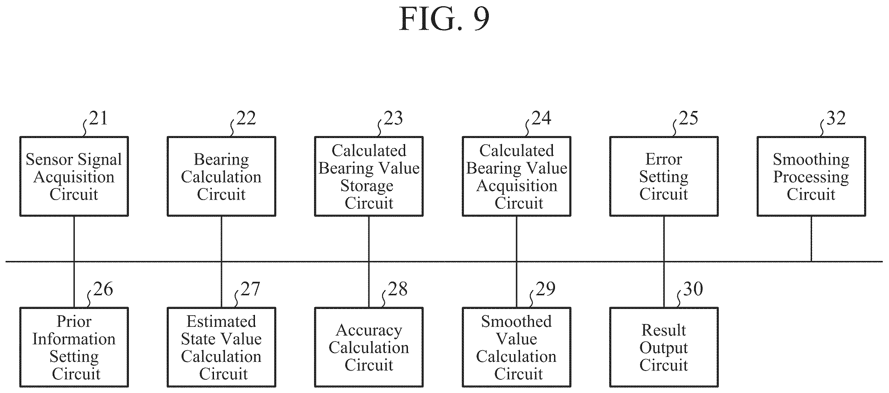

FIG. 9 is a hardware configuration diagram showing the hardware of the target state estimation device according to the third embodiment. In FIG. 9, the same reference numerals as those in FIG. 2 and FIG. 6 denote the same or corresponding components, and therefore, detailed explanation of these components is not made herein.

A target state estimation unit 5 shown in FIG. 8 includes a calculated bearing value acquisition unit 11, an error setting unit 12, a prior information setting unit 13, an estimated state value calculation unit 14, an accuracy calculation unit 15, the smoothed value calculation unit 16, the smoothing processing unit 19, and a result output unit 17.

The smoothing processing unit 19 is formed with a smoothing processing circuit 32 shown in FIG. 9, for example.

The smoothing processing unit 19 acquires a smoothed value from the smoothed value calculation unit 16.

The smoothing processing unit 19 performs a smoothing process for further smoothing the smoothed value, and outputs the smoothed value after the smoothing process to the result output unit 17.

The target state estimation unit 5 shown in FIG. 8 is obtained by adding the smoothing processing unit 19 to the target state estimation unit 5 shown in FIG. 1. However, this is merely an example, and the smoothing processing unit 19 may be added to the target state estimation unit 5 shown in FIG. 5.

In FIG. 8, it is assumed that each of the sensor signal acquisition unit 2, the bearing calculation unit 3, the calculated bearing value storage unit 4, the calculated bearing value acquisition unit 11, the error setting unit 12, the prior information setting unit 13, the estimated state value calculation unit 14, the accuracy calculation unit 15, the smoothed value calculation unit 16, the smoothing processing unit 19, and the result output unit 17, which are components of the target state estimation device, is formed with dedicated hardware as illustrated in FIG. 9. That is, it is assumed that the target state estimation device is formed with a sensor signal acquisition circuit 21, a bearing calculation circuit 22, a calculated bearing value storage circuit 23, a calculated bearing value acquisition circuit 24, an error setting circuit 25, a prior information setting circuit 26, an estimated state value calculation circuit 27, an accuracy calculation circuit 28, a smoothed value calculation circuit 29, the smoothing processing circuit 32, and the result output circuit 30.

Each of the sensor signal acquisition circuit 21, the bearing calculation circuit 22, the calculated bearing value acquisition circuit 24, the error setting circuit 25, the prior information setting circuit 26, the estimated state value calculation circuit 27, the accuracy calculation circuit 28, the smoothed value calculation circuit 29, the smoothing processing circuit 32, and the result output circuit 30 is a single circuit, a composite circuit, a programmed processor, a parallel-programmed processor, an ASIC, an FPGA, or a combination thereof, for example.

The components of the target state estimation device are not necessarily formed with dedicated hardware, and the target state estimation device may be formed with software, firmware, or a combination of software and firmware.

In a case where the target state estimation device is formed with software, firmware, or the like, the calculated bearing value storage unit 4 is formed in the memory 41 shown in FIG. 3. A program for causing a computer to execute each processing procedure in the sensor signal acquisition unit 2, the bearing calculation unit 3, the calculated bearing value acquisition unit 11, the error setting unit 12, the prior information setting unit 13, the estimated state value calculation unit 14, the accuracy calculation unit 15, the smoothed value calculation unit 16, the smoothing processing unit 19, and the result output unit 17 is stored in the memory 41 shown in FIG. 3. The processor 42 shown in FIG. 3 then executes the program stored in the memory 41.

Further, FIG. 9 illustrates an example in which each of the components of the target state estimation device is formed with dedicated hardware, and FIG. 3 illustrates an example in which the target state estimation device is formed with software, firmware, or the like. However, this is merely an example, and some components in the target state estimation device may be formed with dedicated hardware, while the remaining components may be formed with software, firmware, or the like.

Next, an operation to be performed by the target state estimation device illustrated in FIG. 8 is described. However, the target state estimation device is the same as the target state estimation device shown in FIG. 1, except for the smoothing processing unit 19. Therefore, only the operation to be performed by the smoothing processing unit 19 is described herein.

After the target state estimation unit 5 ends a target state estimation process (step ST8 in FIG. 4: NO), the smoothing processing unit 19 acquires a predicted state value $x_{m|m-1}$ and a prediction error covariance matrix $P_{m|m-1}$ from the smoothed value calculation unit 16.

The smoothing processing unit 19 also acquires an estimated target state value $x_{m|m}$ that is a smoothed value and a smoothing error covariance matrix $P_{m|m}$ from the smoothed value calculation unit 16.

The smoothing processing unit 19 sets a smoother gain $S_{m-1}$ to be used in a smoothing process, as shown below in Expression (27).

The smoothing processing unit 19 performs a smoothing process on the estimated target state value $x_{m|m}$ using the smoother gain $S_{m-1}$, and outputs an estimated target state value $x_{RTS,m-1}$ after the smoothing process to the result output unit 17, as shown below in Expression (28). In Expression (28), $x_{m-1|m-1}$ is the estimated target state value one sampling before $x_{m|m}$.

The smoothing processing unit 19 performs a smoothing process on the smoothing error covariance matrix $P_{m|m}$ using the smoother gain $S_{m-1}$, and outputs a smoothing error covariance matrix $P_{RTS,m-1}$ after the smoothing process to the result output unit 17, as shown below in Expression (29). In Expression (28), $P_{m-1|m-1}$ is the smoothing error covariance matrix at a time immediately before $P_{m|m}$.

$$S_{m-1} = P_{m-1|m-1} \Phi_{m-1}^T P_{m|m-1}^{-1} \qquad (27)$$

$$x_{\mathrm{RTS},m-1} = x_{m-1|m-1} + S_{m-1}\left(x_{\mathrm{RTS},m} - x_{m|m-1}\right) \qquad (28)$$

$$P_{\mathrm{RTS},m-1} = P_{m-1|m-1} + \left(P_{\mathrm{RTS},m} - P_{m|m-1}\right)S_{m-1}^T \qquad (29)$$

In the third embodiment described above, the target state estimation device shown in FIG. 8 is designed to include the smoothing processing unit 19 that further smooths a smoothed value calculated by the smoothed value calculation unit 16. Thus, like the target state estimation device shown in FIG. 1, the target state estimation device shown in FIG. 8 can estimate a state of the target, regardless of whether the target's motion is a uniform linear motion. The target state estimation device shown in FIG. 8 can improve its state estimation accuracy, though the responsiveness and promptness of state estimation is lower than that with the target state estimation device shown in FIG. 1.

Note that, in the present disclosure, it is possible to freely combine the respective embodiments, modify any of the components of the respective embodiments, or omit any of the components in the respective embodiments.

INDUSTRIAL APPLICABILITY

The present disclosure is suitable for target state estimation devices and target state estimating methods.

REFERENCE SIGNS LIST

1: Sensor signal processing unit, 2: Sensor signal acquisition unit, 3: Bearing calculation unit, 4: Calculated bearing value storage unit, 5: Target state estimation unit, 11: Calculated bearing value acquisition unit, 12: Error setting unit, 13: Prior information setting unit, 14: Estimated state value calculation unit, 15: Accuracy calculation unit, 16: Smoothed value calculation unit, 17: Result output unit, 18: Abnormal value determination unit, 18a: Predicted state value acquisition unit, 18b: Prediction gate determination unit, 18c: Reliability setting unit, 19: Smoothing processing unit, 21: Sensor signal acquisition circuit, 22: Bearing calculation circuit, 23: Calculated bearing value storage circuit, 24: Calculated bearing value acquisition circuit, 25: Error setting circuit, 26: Prior information setting circuit, 27: Estimated state value calculation circuit, 28: Accuracy calculation circuit, 29: Smoothed value calculation circuit, 30: Result output circuit, 31: Abnormal value determination circuit, 32: Smoothing processing circuit, 41: Memory, 42: Processor

**Claims**

1.  A target state estimation device comprising:

    a calculated bearing value acquisition unit to acquire a calculated bearing value indicating a bearing of a target, every time a period corresponding to a time window elapses;
    an estimated state value calculation unit to estimate a state of the target using a calculated bearing value acquired by the calculated bearing value acquisition unit, and output an estimated state value indicating a result of the state estimation;
    an accuracy calculation unit to calculate an accuracy of the estimated state value output from the estimated state value calculation unit; and
    a smoothed value calculation unit to predict the state of the target by performing a Kalman filter process on the estimated state value output from the estimated state value calculation unit, using the accuracy calculated by the accuracy calculation unit, and calculate a smoothed value indicating the state of the target, using a predicted state value indicating a result of the state prediction.

2.  The target state estimation device according to claim 1, further comprising

    a sensor signal processing unit to acquire a sensor signal from a sensor to observe the target, and calculate the bearing of the target on a basis of the sensor signal, wherein
    the calculated bearing value acquisition unit acquires the calculated bearing value from the sensor signal processing unit, every time the period corresponding to the time window elapses.

3.  The target state estimation device according to claim 1, further comprising:

    an error setting unit to set a measurement error variance of a calculated bearing value acquired by the calculated bearing value acquisition unit; and
    a prior information setting unit to set prior information regarding the state of the target, wherein
    the estimated state value calculation unit estimates the state of the target, using a calculated bearing value acquired by the calculated bearing value acquisition unit, a measurement error variance set by the error setting unit, and prior information set by the prior information setting unit.

4.  The target state estimation device according to claim 1, further comprising an abnormal value determination unit to determine whether a calculated bearing value acquired by the calculated bearing value acquisition unit is an abnormal value, using the predicted state value indicating the result of state estimation performed by the smoothed value calculation unit.

5.  The target state estimation device according to claim 4, wherein
    the abnormal value determination unit converts the predicted state value indicating the result of the state prediction performed by the smoothed value calculation unit into the bearing of the target, calculates a variance from a residual error between a calculated bearing value acquired by the calculated bearing value acquisition unit and the converted bearing and from a residual covariance matrix calculated from a prediction error covariance matrix of the target, and, on a basis of the variance, determines whether a calculated bearing value acquired by the calculated bearing value acquisition unit is an abnormal value.

6. The target state estimation device according to claim 1, further comprising a smoothing processing unit to further smooth the smoothed value calculated by the smoothed value calculation unit.

7. A target state estimation method causing:

a calculated bearing value acquisition unit to acquire a calculated bearing value indicating a bearing of a target, every time a period corresponding to a time window elapses;

an estimated state value calculation unit to estimate a state of the target using a calculated bearing value acquired by the calculated bearing value acquisition unit, and output an estimated state value indicating a result of the state estimation;

an accuracy calculation unit to calculate an accuracy of the estimated state value output from the estimated state value calculation unit; and

a smoothed value calculation unit to predict the state of the target by performing a Kalman filter process on the estimated state value output from the estimated state value calculation unit, using the accuracy calculated by the accuracy calculation unit, and calculate a smoothed value indicating the state of the target, using a predicted state value indicating a result of the state prediction.

# FIG. 1

Sensor Signal Processing Unit (1)
- Sensor Signal Acquisition Unit (2)
- Bearing Calculation Unit (3)

Calculated Bearing Value Storage Unit (4)

Target State Estimation Unit (5)
- Calculated Bearing Value Acquisition Unit (11)
- Error Setting Unit (12)
- Prior Information Setting Unit (13)
- Estimated State Value Calculation Unit (14)
- Accuracy Calculation Unit (15)
- Smoothed Value Calculation Unit (16)
- Result Output Unit (17)

Sensor Signal

# FIG. 2

| | | | | |
|---|---|---|---|---|
| Sensor Signal Acquisition Circuit (21) | Bearing Calculation Circuit (22) | Calculated Bearing Value Storage Circuit (23) | Calculated Bearing Value Acquisition Circuit (24) | Error Setting Circuit (25) |
| Prior Information Setting Circuit (26) | Estimated State Value Calculation Circuit (27) | Accuracy Calculation Circuit (28) | Smoothed Value Calculation Circuit (29) | Result Output Circuit (30) |

EP 4 697 057 A1

FIG. 3

41

Memory

42

Processor

# FIG. 4

```
        ┌─────────┐
        │  START  │
        └─────────┘
             │
             ▼
      ┌──────────────┐  ST1
  NO  │  Has Time    │
◄─────│ Corresponding│
      │   to Time    │
      │Window Elapsed?│
      └──────────────┘
             │ YES
             ▼
   ┌────────────────────┐
   │Acquire Bearing Data│
   │ Set with Calculated│ ST2
   │   Bearing Value    │
   │  Acquisition Unit  │
   └────────────────────┘
             │
             ▼
   ┌────────────────────┐
   │Set Measurement Error│
   │ Variance of        │ ST3
   │Calculated Bearing  │
   │Value with Error    │
   │   Setting Unit     │
   └────────────────────┘
             │
             ▼
   ┌────────────────────┐
   │Set Prior Information│
   │ with Prior         │ ST4
   │Information Setting │
   │       Unit         │
   └────────────────────┘
             │
             ▼
   ┌────────────────────┐
   │Estimate State of   │
   │Target with Estimated│ ST5
   │State Value         │
   │ Calculation Unit   │
   └────────────────────┘
             │
             ▼
   ┌────────────────────┐
   │Calculate Accuracy of│
   │SBWIV Estimated Value│ ST6
   │with Accuracy       │
   │ Calculation Unit   │
   └────────────────────┘
             │
             ▼
   ┌────────────────────┐
   │Calculate Smoothed  │
   │Value with Smoothed │ ST7
   │Value Calculation   │
   │       Unit         │
   └────────────────────┘
             │
             ▼
      ┌──────────────┐  ST8
      │ Is Target    │
      │    State     │ YES
      │ Estimating   │─────►
      │ Process To Be│
      │  Continued?  │
      └──────────────┘
             │ NO
             ▼
        ┌─────────┐
        │   END   │
        └─────────┘
```

FIG. 5

EP 4 697 057 A1

# FIG. 6

| 21 | 22 | 23 | 24 | 25 | 31 |
|---|---|---|---|---|---|
| Sensor Signal Acquisition Circuit | Bearing Calculation Circuit | Calculated Bearing Value Storage Circuit | Calculated Bearing Value Acquisition Circuit | Error Setting Circuit | Abnormal Value Determining Circuit |

| 26 | 27 | 28 | 29 | 30 |
|---|---|---|---|---|
| Prior Information Setting Circuit | Estimated State Value Calculation Circuit | Accuracy Calculation Circuit | Smoothed Value Calculation Circuit | Result Output Circuit |

EP 4 697 057 A1

FIG. 7

FIG. 8

Sensor Signal Processing Unit — 1

Sensor Signal Acquisition Unit — 2

Bearing Calculation Unit — 3

Calculated Bearing Value Storage Unit — 4

Target State Estimation Unit — 5

Calculated Bearing Value Acquisition Unit — 11

Error Setting Unit — 12

Prior Information Setting Unit — 13

Estimated State Value Calculation Unit — 14

Accuracy Calculation Unit — 15

Smoothed Value Calculation Unit — 16

Smoothing Processing Unit — 19

Result Output Unit — 17

Sensor Signal

Sensor Signal

Sensor Signal

# FIG. 9

21 Sensor Signal Acquisition Circuit

22 Bearing Calculation Circuit

23 Calculated Bearing Value Storage Circuit

24 Calculated Bearing Value Acquisition Circuit

25 Error Setting Circuit

32 Smoothing Processing Circuit

26 Prior Information Setting Circuit

27 Estimated State Value Calculation Circuit

28 Accuracy Calculation Circuit

29 Smoothed Value Calculation Circuit

30 Result Output Circuit

## INTERNATIONAL SEARCH REPORT

| International application No. |
| --- |
| **PCT/JP2023/017349** |

| A. | CLASSIFICATION OF SUBJECT MATTER |
| --- | --- |

**G01S 5/04**(2006.01)i; **G01S 5/20**(2006.01)i
FI:  G01S5/04; G01S5/20

According to International Patent Classification (IPC) or to both national classification and IPC

| B. | FIELDS SEARCHED |
| --- | --- |

Minimum documentation searched (classification system followed by classification symbols)

G01S 3/00 - G01S 7/42; G01S 13/00 - G01S 13/95

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

IEEE Xplore

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 10-142325 A (MITSUBISHI ELECTRIC CORPORATION) 29 May 1998 (1998-05-29) paragraphs [0001], [0023]-[0068], fig. 1, 8-9 | 1-3, 6-7 |
| A | | 4-5 |
| A | JP 2021-101193 A (MITSUBISHI HEAVY INDUSTRIES, LTD.) 08 July 2021 (2021-07-08) entire text, all drawings | 1-7 |
| A | JP 2020-71123 A (KABUSHIKI KAISHA TOSHIBA) 07 May 2020 (2020-05-07) entire text, all drawings | 1-7 |
| A | JP 4-350582 A (MITSUBISHI ELECTRIC CORPORATION) 04 December 1992 (1992-12-04) entire text, all drawings | 1-7 |
| A | CN 110471029 A (TIANJIN UNIVERSITY) 19 November 2019 (2019-11-19) entire text, all drawings | 1-7 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 June 2023** | **04 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/017349**

### C. DOCUMENTS CONSIDERED TO BE RELEVANT

| Category* | Citation of document, with indication, where appropriate, of the relevant passages | Relevant to claim No. |
|---|---|---|
| A | ZHOU, Yao et al. EKF based Direct Target Motion Analysis. 2022 2nd Asia Conference on Information Engineering (ACIE). IEEE. 25 July 2022, pp. 56-61, Internet: <URL: https://ieeexplore.ieee.org/stamp/stamp.jsp?tp=&arnumber=9831629><DOI: 10.1109/ACIE55485.2022.00020><br>    entire text, all drawings | 1-7 |

Form PCT/ISA/210 (second sheet) (January 2015)

27

## INTERNATIONAL SEARCH REPORT
### Information on patent family members

International application No.

**PCT/JP2023/017349**

| Patent document cited in search report | | | Publication date (day/month/year) | Patent family member(s) | Publication date (day/month/year) |
|---|---|---|---|---|---|
| JP | 10-142325 | A | 29 May 1998 | (Family: none) | |
| JP | 2021-101193 | A | 08 July 2021 | (Family: none) | |
| JP | 2020-71123 | A | 07 May 2020 | US 2020/0132798 A1 | |
| JP | 4-350582 | A | 04 December 1992 | (Family: none) | |
| CN | 110471029 | A | 19 November 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. BADRIASL** ; **S. ARULAMPALAM** ; **A. FINN**. A Novel Batch Bayesian WIV Estimator for Three-Dimensional TMA Using Bearing and Elevation Measurements. *IEEE Transactions on Signal Processing*, 2018, vol. 66 (4), 1023-1036